# EUROPÄISCHE PATENTSCHRIFT

(11) **EP 0 637 460 B1**
(45) Veröffentlichungstag und Bekanntmachung des Hinweises auf die Patenterteilung: **29.04.1998**
(21) Anmeldenummer: 94102390.5
(22) Anmeldetag: 17.02.1994
(51) Int. Cl.: A63B 55/08

(54) **Selbstfahrendes Fahrzeug, vorzugsweise Golf-Caddy**
Self-propelled vehicle, in particular a golf cart
Véhicule automoteur, en particulier chariot de golf

(30) Priorität: 03.08.1993 DE 4326016
(43) Veröffentlichungstag der Anmeldung: 08.02.1995
(73) Patentinhaber: Bail, Günther, Dr., 82467 Garmisch-Partenkirchen (DE)
(72) Erfinder: Bail, Günther, Dr., 82467 Garmisch-Partenkirchen (DE)
(74) Vertreter: Flosdorff, Jürgen, Dr.

(56) Entgegenhaltungen:
- US-A- 3 742 507
- US-A- 3 748 564
- US-A- 4 109 186
- US-A- 4 844 493

## Beschreibung

Die Erfindung betrifft ein System, bestehend aus einem selbstfahrenden Fahrzeug, vorzugsweise einem Golf-Caddy, und einem Sender gemäß dem Oberbegriff des Patentanspruchs 1.

Die Erfindung ist nicht nur auf Golfwagen anwendbar, die bisher üblicherweise als Handgolfwagen von einem Spieler an Handgriffen geführt werden und den Golfsack mit den Schlägern tragen, sondern auch auf andere Fahrzeuge, für deren Anwendungszweck es vorteilhaft sein kann, wenn diese Fahrzeuge automatisch einem beweglichen Sender folgen können.

Aus den US-PSen 3,742,507 und 4,844,493 sind bereits automatische Golfwagen bekannt, die eine Peilvorrichtung haben, mit deren Hilfe sie sich selbsttätig einem zugehörigen Sender nähern können, den die Spielperson trägt. Die Peilvorrichtung der vorbekannten Golfwagen besteht in einem Fall aus einer Hochfrequenzpeileinrichtung und bei der anderen vorbekannten Ausführungsform aus einer Infrarotpeileinrichtung, die jeweils nicht die Möglichkeit bieten, den genauen Abstand zu dem zugehörigen Sender zu bestimmen. Die vorbekannten Golfwagen sind daher nicht in der Lage, sich jeweils genau bis auf eine vorgegebene Distanz an den Sender anzunähern und bei Erreichen dieses Minimalabstands selbsttätig stehen zu bleiben, bis sich die Spielperson mit dem Sender wieder in Bewegung setzt. Damit sind die vorbekannten Golfwagen für die Praxis nicht geeignet.

Aus der US-PS 4,109,186 ist ein drahtlos gesteuertes Führungs- und Geschwindigkeitssteuersystem für einen Golf-Caddy bekannt, der beabstandete Empfänger hat, um von einer beweglichen Energiequelle magnetische Energiesignale zu empfangen. Die empfangenen Signale variieren entsprechend den Positionen der Empfänger bezüglich der Energiequelle und werden elektrisch verarbeitet, um getrennte Motoren zu steuern, die zwei Räder des Golf-Caddy antreiben, um diesen zu starten, zu lenken und anzuhalten.

Aus der US-PS 3,748,564 ist ferngesteuertes Fahrzeug mit einem rechten und einem linken Antriebsrad bekannt, die unabhängig von zwei elektrischen Gleichstrommotoren antreibbar sind, wobei das Fahrzeug auf ein Steuersignal reagiert, das von einem tragbaren Sender abgegeben wird, der von einer sich bewegenden Person getragen wird. Das Fahrzeug hat ein elektronisches Steuersystem mit einem Empfänger, der das ausgesandte Steuersignal empfängt und daraus ein Abstandssignal ableitet, das der Entfernung zwischen der Person und dem Fahrzeug entspricht, sowie ein Peilsignal für den Kurs des Fahrzeugs relativ zu der Person. Ein Verstärkerschaltkreis wandelt die Abstands- und Peilsignale in Steuersignale für die Motoren des rechten und des linken Rades um.

Der vorliegenden Erfindung liegt die Aufgabe zugrunde, ein System aus einem selbstfahrenden Fahrzeug, vorzugsweise -jedoch nicht ausschließlich- einem Golf-Caddy und einem Sender so weiter zu entwickeln, daß der Golf-Caddy automatisch dem Sender folgen und in einem exakt einzuhaltenden Abstand von dem Sender selbsttätig anhalten kann. Das Fahrzeug soll außerdem in der Lage sein, sich auch dann selbsttätig dem Sender zu nähern, wenn sich dieser in einer größeren Entfernung befindet.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Gemäß der vorliegenden Erfindung enthält das System aus Fahrzeug und Sender sowohl eine Hochfrequenzpeileinrichtung, die dann wirksam ist, wenn der Abstand zwischen dem Fahrzeug und dem Sender eine vorbestimmte Distanz übersteigt und deren Aufgabe es ist, die Richtung zu ermitteln, in der sich vom Fahrzeug aus gesehen der Sender befindet, als auch eine Ultraschallpeileinrichtung, die sowohl die Richtung des Senders als auch den jeweiligen Abstand zwischen dem Fahrzeug und dem Sender -vorzugsweise mit Hilfe eines Prozessors- ermittelt, wenn sich das Fahrzeug innerhalb der vorbestimmten Distanz zu dem Sender befindet.

Die Hochfrequenzpeileinrichtung ermöglicht es damit dem Fahrzeug, sich vorzugsweise auf einer geradlinigen Bahn dem Bereich um den Sender zu nähern, in dem die von dem Sender in kurzen Zeitabständen von beispielsweise 0,5 bis 1 s abgegebenen Ultraschallsigale empfangen werden können. Wenn sich das Fahrzeug innerhalb dieses Bereichs befindet, empfängt es die Ultraschallsignale und schaltet von der Hochfrequenzpeilung auf die Ultraschallpeilung um. Zum Empfang der Ultraschallsignale sind an dem Fahrzeug vorzugsweise zwei in Querrichtung beabstandete Ultraschallempfangseinrichtungen befestigt, die die empfangenen Signale an den an dem Fahrzeug angebrachten Prozessor abgeben, der aus der Differenz der empfangenen Signale exakt die jeweilige Richtung und den jeweiligen Abstand des Senders von dem Fahrzeug ermittelt. Der Prozessor gibt entsprechend den empfangenen Signalen Steuersignale an die Antriebseinrichtung des Fahrzeugs ab, so daß dieses dem Sender stetig folgt, wobei das Fahrzeug im Gegensatz zur Annäherung im Hochfrequenzpeilbereich auch von dem Sender vorgegebene Kurvenbahnen durchfährt.

Wenn sich das Fahrzeug bis auf einen vorgegebenen Minimalabstand dem Sender angenähert hat, schaltet die Steuereinrichtung die Antriebseinrichtung des Fahrzeugs ab, und das Fahrzeug bleibt selbsttätig stehen.

Damit das Fahrzeug nicht jeder kleinen Bewegung des Senders folgt, versetzt die Steuereinrichtung bzw. der Prozessor das Fahrzeug erst dann wieder in Bewegung, wenn sich der Sender über eine ebenfalls vorgegebene Strecke von dem Fahrzeug entfernt hat.

Wenn das erfindungsgemäße Fahrzeug ein Golf-Caddy ist, wie dies bevorzugt ist, sollte der Golfwagen in einem Abstand von etwa 2 bis 3 m von der den Sender tragenden Spielperson selbsttätig zum Stillstand kommen. Zweckmäßigerweise folgt der Golfwagen der Spielperson dann, wenn sie sich ca. 5 bis 6 m von dem Golfwagen entfernt hat. Auf diese Weise stellt der Golfwagen kein störendes Hindernis beim Spielbetrieb dar und schränkt den Bewegungsspielraum der Spielperson nicht ein. Andererseits sind die von dem Golfwagen transportierten Golfschläger für die Spielperson stets griffbereit.

Wie bereits erwähnt, ist die Grenze, an der von der Hochfrequenzpeilung auf die Ultraschallpeilung automatisch umgestellt wird, durch den Empfangsbereich der Ultraschallsignale bestimmt. Dieser Empfangsbereich erstreckt sich vorzugsweise über eine Strecke von etwa 10 bis 20 m.

Der Sender des automatischen Golfcaddysystems enthält eine Start- und Stopptaste. Wenn die Starttaste gedrückt wird, wird das Fahrzeug in den Bereitschaftszustand versetzt, aus dem es automatisch dem Sender folgt. Hierzu erfaßt der die Steuereinrichtung enthaltende Prozessor des Fahrzeugs zunächst, ob das Ultraschallempfangssystem des Fahrzeugs Ultraschallsignale empfängt, mit denen das Fahrzeug steuerbar ist. Ist dies nicht der Fall, aktiviert die Steuereinrichtung die Hochfrequenzpeileinrichtung zur Ausführung eines Peilvorgangs.

In Ausgestaltung der Erfindung kann an dem Fahrzeug eine Hochfrequenz-Empfangsantenne unbeweglich angebracht sein, die bevorzugt in Fahrtrichtung des Fahrzeugs weist. Bei dieser Ausgestaltung wird der Hochfrequenzpeilvorgang zweckmäßigerweise so ausgeführt, daß die Antriebseinrichtung des Fahrzeugs so gesteuert wird, daß sie das Fahrzeug zunächst um 360° dreht, wobei die Richtung des Senders entweder über die Erfassung der Lage des Maximums des Hochfrequenzsignals oder durch Mittelung der beiden Minimalwerte bestimmt wird. Das Fahrzeug wird im Anschluß an die 360°-Drehung weiter in Richtung des Senders gedreht.

In einer alternativen Ausgestaltung der Erfindung kann die Hochfrequenz-Peilung über den Doppler-Effekt ausgeführt werden, indem mindestens drei Antennen angeordnet werden, die elektrisch nacheinander auf den Empfänger geschaltet werden.

Wenn die Richtung des Senders ermittelt und das Fahrzeug auf diese Richtung eingestellt ist, steuert die Steuereinrichtung die Antriebseinrichtung des Fahrzeugs so, daß sich dieses geradlinig auf den Sender zu bewegt. Im Normalfall gerät das Fahrzeug dabei in die Ultraschallpeilzone, so daß es sich dann auf die weiter oben beschriebene Weise dem Sender weiter annähern kann.

Wenn sich während der geradlinigen Annäherung des Fahrzeugs aber der Sender so weit bewegt, daß das Fahrzeug nicht in die Ultraschallpeilzone gerät, schaltet die Steuereinrichtung die Antriebseinrichtung des Fahrzeugs nach Durchfahren einer vorgegebenen Strecke ab, wodurch das Fahrzeug wieder in den Bereitschaftszustand versetzt wird, in dem eine erneute Hochfrequenzpeilung durchgeführt wird. Die Steuereinrichtung kann hierzu beispielsweise mit einer Wegmeßeinrichtung verbunden sein.

Im Normalfall wird der erfindungsgemäße automatische Golfwagen der Spielperson in der Weise folgen, daß er sich stets innerhalb der Ultraschallpeilzone befindet. Es kommt jedoch vor, daß ein Golfspieler ein Gelände betreten muß, in das ihm der Golfwagen nicht folgen kann, beispielsweise einen Sandbunker oder dichtes Unterholz. In diesem Fall wird der erfindungsgemäße Golfwagen durch Druck auf die Stopptaste des Handsenders abgeschaltet. Wenn der Spieler wieder für den Golfwagen befahrbares Gelände betritt, versetzt er den Golfwagen durch Druck auf die Starttaste des Handsenders wieder in den Bereitschaftszustand, aus dem heraus sich der Golfwagen auch über eine größere Distanz der Spielperson bis zu dem eingestellten Minimalabstand nähert. Somit ist durch die Hochfrequenzpeileinrichtung das Erfordernis vermieden, daß sich die Spielperson ihrerseits dem Golfwagen bis zu der Ultraschallpeilzone nähert, damit ihr der Golfwagen automatisch folgen kann.

Der erfindungsgemäße Golfwagen hat zweckmäßigerweise ein freilaufendes Vorderrad, das um eine vertikale Achse frei schwenkbar gelagert ist, und zwei seitlich beabstandete Hinterräder, die von unabhängig voneinander steuerbaren Elektromotoren antreibbar sind. Der Golfwagen wird dadurch gelenkt, daß die Hinterräder mit unterschiedlichen Geschwindigkeiten angetrieben werden.

Wenn die Elektromotoren abgeschaltet sind, sind die Antriebsräder des Golfwagens blockiert, damit dieser auch auf geneigtem Untergrund sicher stehen bleibt.

Mit großem Vorteil wird ferner vorgeschlagen, daß sich der Golfwagen bei der geradlinigen Annäherung im Hochfrequenzpeilbereich mit einer größeren Geschwindigkeit bewegt als in dem Ultraschallpeilbereich, in dem die Fahrgeschwindigkeit des Fahrzeugs auf die Laufgeschwindigkeit der Spielperson abgestimmt werden kann. Die Steuereinrichtung schaltet automatisch bei Erreichen des Ultraschallpeilbereichs die Geschwindigkeit herunter.

Um zu vermeiden, daß das erfindungsgemäße Fahrzeug während seiner Fahrt mit Menschen oder Tieren kollidiert, die sich in seiner Fahrtroute aufhalten, sollte es ferner mit einem Infrarot-Detektor ausgerüstet sein, der solche Wärme-abstrahlenden Hindernisse erkennt, so daß die Steuereinrichtung das Fahrzeug rechtzeitig zum Stillstand bringen kann.

Das erfindungsgemäße Fahrzeug ist in der Lage, sich auch über große Distanz an den zugehörigen Sender anzunähern, indem es sich zunächst nach einer Hochfrequenzpeilung geradlinig auf den Sender zu bewegt und dann mittels Ultraschallpeilung dem Sender auch auf Kurvenbahnen folgt, um exakt bei Erreichen eines vorgegebenen Minimalabstandes selbsttätig anzuhalten. Wenn sich der Sender eine vorbestimmte Aktivierungsdistanz von dem Fahrzeug entfernt hat, folgt es ihm wieder exakt bis zu dem Minimalabstand, den die Ultraschallpeilung genau ermitteln kann.

Weitere Einzelheiten der Erfindung ergeben sich aus der nachfolgenden Beschreibung sowie anhand der Zeichnung. Dabei zeigen:
- Fig. 1: einen Systemüberblick eines Golfwagens und
- Fig. 2: ein Grobflußschema des Caddy-Systems.

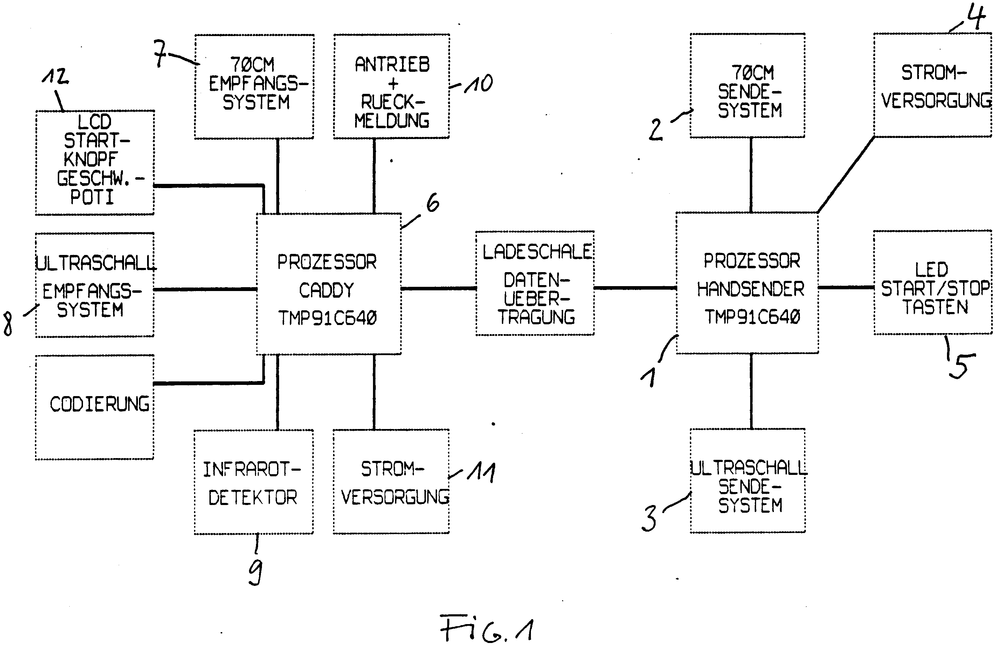

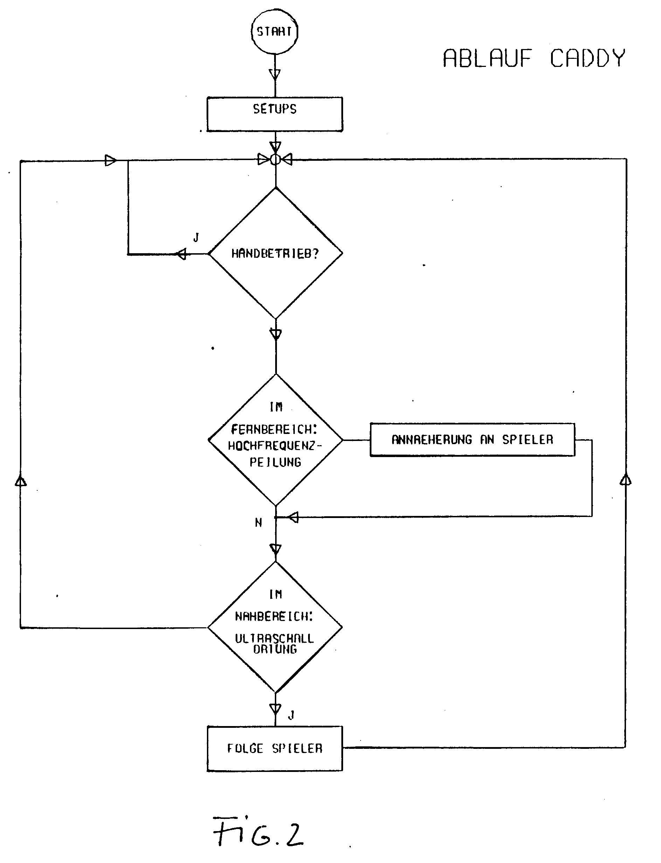

Fig. 1 läßt erkennen, daß der Handsender einen Prozessor 1, ein Hochfrequenzsendesystem 2 der Wellenlänge 70 cm, ein Ultraschallsendesystem 3, eine Stromquelle 4 und Start/Stopp-Tasten 5 aufweist.

Der Golfwagen enthält einen Prozessor 6, ein Hochfrequenzempfangssystem 7, ein Ultraschallempfangssystem 8, einen Infrarotdetektor 9, zwei Elektromotoren, die mit den Hinterrädern des Golfwagens antriebsmäßig verbunden, und ebenfalls eine Stromquelle 11.

Die Stromversorgung erfolgt durch je einen Akkumulator für das Fahrzeug und den Handsender, wobei beide Akkumulatoren über automatische Ladegeräte aufgeladen werden.

Der Golfwagen kann durch Betätigung eines Schalters 12 und über einen Geschwindigkeitsregler auch jederzeit unabhängig vom Sender im Handbetrieb gefahren werdne, wobei er dann von Hand gelenkt werden muß.

Über die Stopp-Taste des Handsenders kann der Golfwagen jederzeit in einen Wartezustand versetzt werden, in dem er nur per Handbetrieb bewegbar ist.

Das Grobflußschema zeigt anschaulich, daß der erfindungsgemäße Golfwagen entweder im Handbetrieb gefahren werden kann oder automatisch einer Spielperson folgt, wobei er hierzu im Fernbereich die Hochfrequenzpeilung und nach Annäherung an den Spieler im Nahbereich die Ultraschallortung anwendet. Die Geschwindigkeit des Golfwagens, die Größe des Minimalabstandes und des Abstandes, bei dem der Golfwagen dem Sender folgt etc. können eingestellt werden.

Die einzelnen Bauteile wie Prozessor 6, Hochfrequenzempfangssystem 7, Ultraschallempfangssystem 8, Infrarotdetektor, Akkumulator etc. können auf jede zweckmäßige Weise an dem Golfwagen angeordnet sein, wobei dies auch auf die Bauteile des Handsenders zutrifft.

## Patentansprüche

1. System, bestehend aus einem selbstfahrenden Fahrzeug, vorzugsweise Golfwagen, und einem Sender, wobei das Fahrzeug eine Antriebseinrichtung, eine Steuereinrichtung und einer Hochfrequenzpeilvorrichtung aufweist, mit deren Hilfe sich das Fahrzeug selbsttätig dem Sender nähern kann,
**dadurch gekennzeichnet,**
daß der Sender Hochfrequenzsignale und Ultraschallsignale aussendet und daß die Peilvorrichtung eine Hochfrequenzpeileinrichtung (2,7), die bei einem eine vorbestimmte Distanz übersteigenden Abstand zwischen dem Fahrzeug und dem Sender wirksam ist, um die Richtung des Senders zu ermitteln, und eine Ultraschallpeileinrichtung (3, 8) aufweist, die dann wirksam ist, wenn sich das Fahrzeug innerhalb der vorbestimmten Distanz zu dem Sender befindet, um die Richtung des Senders und den jeweiligen Abstand von diesem zu ermitteln.

2. System nach Anspruch 1,
dadurch gekennzeichnet, daß die vorbestimmte Distanz die Strecke ist, über die Ultraschallsignale zur Steuerung des Fahrzeugs empfangbar sind.

3. System nach 1 oder 2,
dadurch gekennzeichnet, daß im Bereitschaftszustand des Fahrzeugs dessen Steuereinrichtung (6) erfaßt, ob Ultraschallsignale empfangen werden.

4. System nach Anspruch 3,
dadurch gekennzeichnet, daß in dem Fall, in dem keine Ultraschallsignale empfangen werden, die Steuereinrichtung (6) des Fahrzeugs die Hochfrequenzpeileinrichtung zur Ausführung eines Peilvorgangs aktiviert.

5. System nach einem der Ansprüche 1 bis 4,
dadurch gekennzeichnet, daß die Hochfrequenzpeileinrichtung eine am Fahrzeug unbeweglich angebrachte Hochfrequenzempfangsantenne (7) aufweist und daß der Hochfrequenzpeilvorgang in der Weise ausgeführt wird, daß die Antriebseinrichtung (10) das Fahrzeug um mindestens 360° dreht.

6. System nach einem der Ansprüche 1 bis 4,
dadurch gekennzeichnet, daß die Hochfrequenzpeileinrichtung mindestens drei Antennen aufweist, mit denen eine Doppler-Peilung ausgeführt wird.

7. System nach einem der Ansprüche 1 bis 6,
dadurch gekennzeichnet, daß die Steuereinrichtung (6) die Antriebseinrichtung (10) des Fahrzeugs so steuert, daß dieses nach dem Hochfrequenzpeilvorgang geradlinig in die ermittelte Richtung fährt, bis es entweder in den Ultraschallempfangsbereich gerät oder von der Steuereinrichtung (6) wieder in den Bereitschaftszustand versetzt wird.

8. System nach einem der Ansprüche 1 bis 7,
dadurch gekennzeichnet, daß an dem Fahrzeug zwei in Querrichtung des Fahrzeugs beabstandete Ultraschallempfangseinrichtungen (8) befestigt sind, deren Empfangssignale fortlaufend von einem an dem Fahrzeug befestigten Prozessor (6) derart ausgewertet werden, daß jeweils die Richtung und der Abstand zum Sender ermittelt werden.

9. System nach Anspruch 8,
dadurch gekennzeichnet, daß der Prozessor (6) die Antriebseinrichtung so steuert, daß das Fahrzeug dem Sender folgt, bis ein vorbestimmter Minimalabstand von dem Sender erreicht ist.

10. System nach einem der Ansprüche 1 bis 9,
dadurch gekennzeichnet, daß das Fahrzeug ein freilaufendes Vorderrad, welches um eine vertikale Achse frei schwenkbar gelagert ist, und zwei Hinterräder aufweist, die von zwei Elektromotoren antreibbar sind, die unabhängig voneinander steuerbar sind.

11. System nach einem der Ansprüche 1 bis 10,
dadurch gekennzeichnet, daß die Antriebseinrichtung (10) so gesteuert wird, daß sie das Fahrzeug bei der geradlinigen Annäherung in Hochfrequenzpeilbereich mit einer größeren Geschwindigkeit antreibt als im Ultraschallpeilbereich.

12. System nach einem der Ansprüche 1 bis 11,
dadurch gekennzeichnet, daß ferner ein in Fahrtrichtung weisender Infrarot-Detektor (9) angeordnet ist.

## Claims

1. System consisting of an automotive vehicle, preferably golf cart, and a transmitter, the vehicle comprising a drive means, a control means, and a high-frequency position finder with the aid of which the vehicle can approach the transmitter automatically,
**characterized in**
that said transmitter sends high-frequency signals and ultrasonic signals, and that said position finder comprises a high-frequency position finder (2, 7) which is active between said vehicle and said transmitter at a distance exceeding a predetermined distance so as to determine the direction of said transmitter, and an ultrasonic position finder (3, 8) which is active whenever said vehicle is within the predetermined distance from said transmitter to determine the direction of said transmitter and the respective distance therefrom.

2. The system according to claim 1,
characterized in that said predetermined distance is the distance over which ultrasonic signals can be received for controlling said vehicle.

3. The system according to claim 1 or 2,
characterized in that in the ready state of said vehicle the control means (6) thereof detects whether ultrasonic signals are received.

4. The system according to claim 3,
characterized in that in the case where no ultrasonic signals are received said control means (6) of said vehicle activates said high-frequency position finder for performing a position finding operation.

5. The system according to any of claims 1 to 4,
characterized in that said high-frequency position finder comprises a high-frequency reception antenna (7) which is stationarily mounted on said Vehicle and that the high-frequency position finding operation is performed such that said drive means (10) rotates said vehicle by at least 360°.

6. The system according to any of claims 1 to 4,
characterized in that said high-frequency position finder has at least three antennae with the aid of which a Doppler position finding operation is performed.

7. The system according to any of claims 1 to 6,
characterized in that said control means (6) controls said drive means (10) of said vehicle in such a manner that after the high-frequency position finding operation the vehicle moves in a straight line in the determined direction until it passes either into the ultrasonic reception range or is again place in readiness by said control means (6).

8. The system according to any of claims 1 to 7,
characterized in that two ultrasonic receiving means (8) which are spaced apart in the transverse direction of said vehicle and whose reception signals are continuously evaluated by a processor (6) mounted on said vehicle in such a manner that the direction and the distance from the transmitter are respectively determined are secured to the vehicle.

9. The system according to claim 8,
characterized in that said processor (6) controls said drive means such that said vehicle follows said transmitter until a predetermined minimum distance from said transmitter has been reached.

10. The system according to any of claims 1 to 9,
characterized in that said vehicle comprises a free-running front wheel which is supported to pivot freely about a vertical axis, and two rear wheels which are drivable by two electric motors which can be controlled independently of each other.

11. The system according to any of claims 1 to 10,
characterized in that said drive means (10) is controlled such that it drives said vehicle, which is approaching in a straight line, at a greater speed in the high-frequency position finding range than in the ultrasonic position finding range.

12. The system according to any of claims 1 to 11,
characterized in that an infrared detector (9) which is oriented in the traveling direction is also arranged.

## Revendications

1. Système, consistant en un véhicule automoteur, de préférence un chariot de golf, et en un émetteur, le véhicule présentant un dispositif d'entraînement, un dispositif de commande et un dispositif de repérage à haute fréquence, à l'aide duquel le véhicule peut automatiquement se rapprocher de l'émetteur,
caractérisé en ce que
l'émetteur envoie des signaux à haute fréquence et des signaux ultrasonores et en ce que le dispositif de repérage présente un dispositif de repérage à haute fréquence (2, 7) qui est en fonction lorsque l'écart entre le véhicule et l'émetteur dépasse une distance prédéterminée, afin de détecter la direction de l'émetteur, et un dispositif de repérage à ultrasons (3, 8) qui, quant à lui, est en fonction lorsque le véhicule se trouve dans les limites de la distance prédéterminée par rapport à l'émetteur, afin de détecter la direction de l'émetteur et l'écart correspondant par rapport à celui-ci.

2. Système selon la revendication 1,
caractérisé en ce que la distance prédéterminée est l'étendue sur laquelle les signaux ultrasonores servant à la commande du véhicule peuvent être reçus.

3. Système selon la revendication 1 ou 2,
caractérisé en ce que, lorsque le véhicule est en position de repos, son dispositif de commande (6) établit si des signaux ultrasonores sont reçus.

4. Système selon la revendication 3,
caractérisé en ce que, si aucun signal ultrasonore n'est reçu, le dispositif de commande (6) du véhicule met en fonction le dispositif de repérage à haute fréquence pour l'exécution d'une opération de repérage.

5. Système selon l'une des revendications 1 à 4,
caractérisé en ce que le dispositif de repérage à haute fréquence comporte une antenne de repérage à haute fréquence (7), montée de manière fixe sur le véhicule, et en ce que l'opération de repérage à haute fréquence est exécutée de telle manière que le dispositif d'entraînement (10) tourne le véhicule d'au moins 360°.

6. Système selon l'une des revendications 1 à 4, caractérisé en ce que le dispositif de repérage à haute fréquence présente au moins trois antennes, au moyen desquelles est effectué un repérage Doppler.

7. Système selon l'une des revendications 1 à 6,
caractérisé en ce que le dispositif de commande (6) commande le dispositif d'entraînement (10) du véhicule de telle manière que celui-ci roule, après l'opération de repérage à haute fréquence, en ligne droite dans la direction détectée jusqu'à ce que soit il entre dans la zone de réception des ultrasons, soit il soit de nouveau mis par le dispositif de commande (6) dans la position de repos.

8. Système selon l'une des revendications 1 à 7,
caractérisé en ce que deux dispositifs récepteurs d'ultrasons (8) sont fixés sur le véhicule, avec un écartement entre eux dans le sens transversal du véhicule, les signaux reçus étant évalués en continu par un processeur (6) monté sur le véhicule, de telle manière que soient chaque fois déterminés la direction de l'émetteur et l'écart par rapport à l'émetteur.

9. Système selon la revendications 8,
caractérisé en ce que le processeur (6) commande le dispositif d'entraînement de telle manière que le véhicule suive l'émetteur jusqu'à ce que soit obtenu un écart minimal prédéterminé par rapport à l'émetteur.

10. Système selon l'une des revendications 1 à 9,
caractérisé en ce que le véhicule présente une roue avant libre, qui est montée pour pouvoir pivoter librement autour d'un axe vertical, et deux roues arrière, qui peuvent être entraînées par deux moteurs électriques, qui peuvent être commandés indépendamment l'un de l'autre.

11. Système selon l'une des revendications 1 à 10,
caractérisé en ce que le dispositif d'entraînement (10) est commandé de telle manière qu'il déplace le véhicule à une vitesse plus élevée lors d'une approche en ligne droite dans la zone de repérage à haute fréquence, que ce n'est le cas dans la zone de repérage par ultrasons.

12. Système selon l'une des revendications 1 à 11,
caractérisé en ce qu'il est en outre prévu un détecteur à infrarouges (9) dirigé dans le sens de la marche.
